# EUROPÄISCHE PATENTSCHRIFT

(11) **EP 2 420 119 B1**
(45) Veröffentlichungstag und Bekanntmachung des Hinweises auf die Patenterteilung: **24.07.2013**
(21) Anmeldenummer: 11401565.4
(22) Anmeldetag: 08.08.2011
(51) Int. Cl.: A01B 35/06, A01C 5/06

(54) **Striegelvorrichtung für Bodenbearbeitungs- und/oder Sägegeräte**
Spring tine furrow closer for soil-working and/or sowing device
Dispositif de recouvrement pour travail du sol et/ou dispositif de semis

(30) Priorität: 18.08.2010 DE 102010037032
(43) Veröffentlichungstag der Anmeldung: 22.02.2012
(73) Patentinhaber: Amazonen-Werke H. Dreyer GmbH & Co. KG, 49205 Hasbergen (DE)
(72) Erfinder: Plugge, Manfred, 57413 Finnentrop-Frielentrop (DE); Pokriefke, Michael, 27798 Hude (DE); van Zoest, Ralf, 46767 Twist (DE)

(56) Entgegenhaltungen:
- EP-A1- 0 174 569
- EP-A1- 0 281 802
- EP-A1- 0 336 513
- EP-A1- 0 760 201
- EP-A1- 2 168 415
- WO-A1-03/081980
- WO-A1-2009/102277
- FR-A1- 2 498 047
- US-A- 2 171 025
- US-A- 5 431 232
- US-A1- 2009 200 052
- US-B1- 6 425 446

## Beschreibung

Die Erfindung betrifft eine Striegelvorrichtung für Bodenbearbeitungs- und/oder Sägegeräte gemäß des Oberbegriffes des Patentanspruches 1.

Eine derartige Striegelvorrichtung für Bodenbearbeitungs-und/oder Sägegeräte ist in der Praxis bekannt geworden. Eine solche Striegelvorrichtung weist eine Mehrzahl von Striegelelementen auf, die jeweils paarweise mittels eines Befestigungselementes über eine die beiden Striegelelemente verbindenden Quersteg an einem Querbalken befestigt sind. Zwischen dem Quersteg und den nach unten in Richtung des Bodens ragenden Striegelzinken sind mehrere Federwindungen angeordnet. Aufgrund der Federwindungen können die Striegelzinken sich gegenüber dem Quersteg in jeder Richtung bewegen und beim Auftreffen auf im Boden festsetzenden Hindernissen ausweichen. Somit können die Striegelzinken über Federwindungen in jede Richtung federnd ausweichen. Um das federnde Ausweichen der Striegelzinken in jeder Richtung einzuschränken, sind die beiden Striegelzinken in ihrem oberen Bereich in der Nähe der Federwindungen mittels einer Stabilisierungsstrebe in stabilisierender Weise miteinander verbunden. Diese Stabilisierungsstrebe besteht bei der bekannten Striegelvorrichtung aus einem Blechstreifen, welcher an seinen Enden um die Striegelzinken umgebogen ist. Das jeweilige umgebogene Ende des Blechstreifens ist mit dem zwischen den Striegelzinken sich befindlichen Blechstreifen mittels einer Schraubverbindung verbunden. Die US 2009 200 052 A1 zeigt eine ähliche Striegelvorrichtung. Durch diese Stabilisierungsstrebe wird jedoch keine ausreichende und zufriedenstellende seitliche Stabilisierung der Striegelzinken erreicht. Außerdem besteht die Gefahr, dass die Stabilisierungsstrebe von den Striegelzinken abrutscht. Der Erfindung liegt die Aufgabe zu Grunde, in einfacher Weise eine verbesserte Stabilisierung der Striegelzinken in seitlicher Richtung und gleichzeitig eine rutschsichere Befestigung der Stabilisierungsstrebe an den Striegelzinken zu gewährleisten.

Diese Aufgabe wird erfindungsgemäß dadurch gelöst, dass die in den Striegelzinken übergehende Federwindung zumindest in dem Übergangsbereich zwischen Federwindung und Striegelzinken einen größeren Durchmesser als die übrigen Federwindungen aufweist, dass die Stabilisierungsstrebe zumindest teilweise in dem den besagten größeren Durchmesser aufweisenden Bereich der Federwindung angeordnet ist.

Infolge dieser Maßnahmen lässt sich in wesentlich verbesserter Weise die Stabilisierungsstrebe auf die einen größeren Durchmesser aufweisende Federwindung der Striegelelemente anordnen. Hierdurch wird die Voraussetzung für eine verbesserte Stabilisierung der Striegelzinken in seitlicher Richtung zueinander erreicht. Außerdem wird ein besseres verklemmen der Stabilisierungsstrebe mit den Striegelzinken im Bereich der Federwindung erreicht.

Eine einfache und sichere Anordnung der Stabilisierungsstrebe auf den Striegelzinken, auch im Bereich der Federwindung lässt sich dadurch erreichen, dass die Stabilisierungsstrebe für jeden Striegelzinken zwei beabstandet übereinander liegende Durchbrüche, durch welche jeweils ein Striegelzinken im montierten Zustand der Stabilisierungsstrebe gesteckt ist, aufweist.

Eine weitere Verbesserung der sicheren Anordnung der Stabilisierungsstrebe im Bereich der Federwindung auf dem jeweiligen Striegelzinken des Striegelelementes wird dadurch erreicht, dass der jeweilige Striegelzinken unmittelbar unterhalb des Bereiches, in dem die Stabilisierungsstrebe angeordnet ist, gegenüber diesem besagten Bereich mittels einer Abwinklung abgewinkelt ist.

Eine vorteilhafte Ausgestaltung der Stabilisierungsstrebe ergibt sich dadurch, dass die Stabilisierungsstrebe aus zwei zueinander abgewinkelten und miteinander verbundenen Flächenelemente besteht, dass jeweils in dem Bereich der äußeren Ecken der Flächenelemente die Durchbrüche, durch welche die Striegelzinken gesteckt sind, angeordnet sind. Weiterhin lässt sich durch die Abwinklung der Flächenelemente zueinander eine einfache Befestigung der Stabilisierungsstrebe auf den Striegelzinken durch einfaches aufschieben erreichen.

Eine einfache und sichere Befestigung der Stabilisierungsstrebe auf den Striegelzinken lässt sich dadurch erreichen, dass die Durchbrüche und/oder die zueinander abgewinkelten Flächen im Bezug auf die durch die Durchbrüche gesteckten Zinken derart ausgebildet und/oder angeordnet sind, dass die jeweilige Stabilisierungsstrebe mittels Reibschluß auf den Striegelzinken angeordnet ist.

Weitere Einzelheiten der Erfindung sind der Beispielsbeschreibung und den Zeichnungen zu entnehmen. Hierbei zeigen
- Fig. 1: ein Striegelelement mit montierter Stabilisierungsstrebe in perspektivischer Darstellung,
- Fig. 2: das Striegelelement mit montierter Stabilisierungsstrebe gemäß Fig. 1 in der Ansicht von hinten,
- Fig. 3: das Striegelelement mit montierter Stabilisierungsstrebe gemäß Fig. 1 in Seitenansicht,

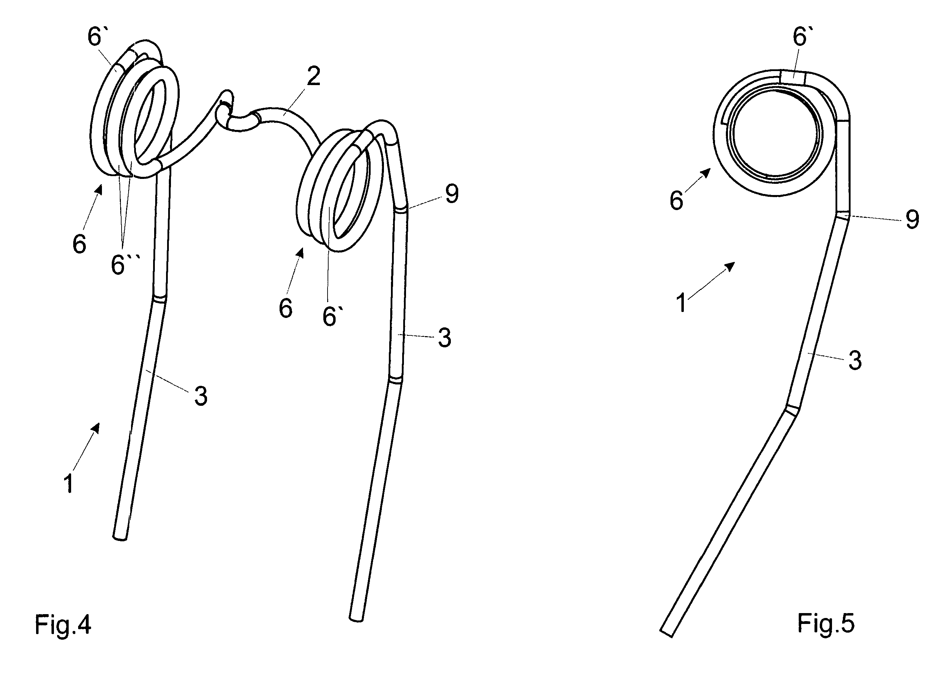

- Fig. 4: das erfindungsgemäße Striegelelemente ohne Stabilisierungsstrebe in perspektivischer Darstellung,
- Fig. 5: das Striegelelement mit ohne Stabilisierungsstrebe gemäß Fig. 4 in Seitenansicht,

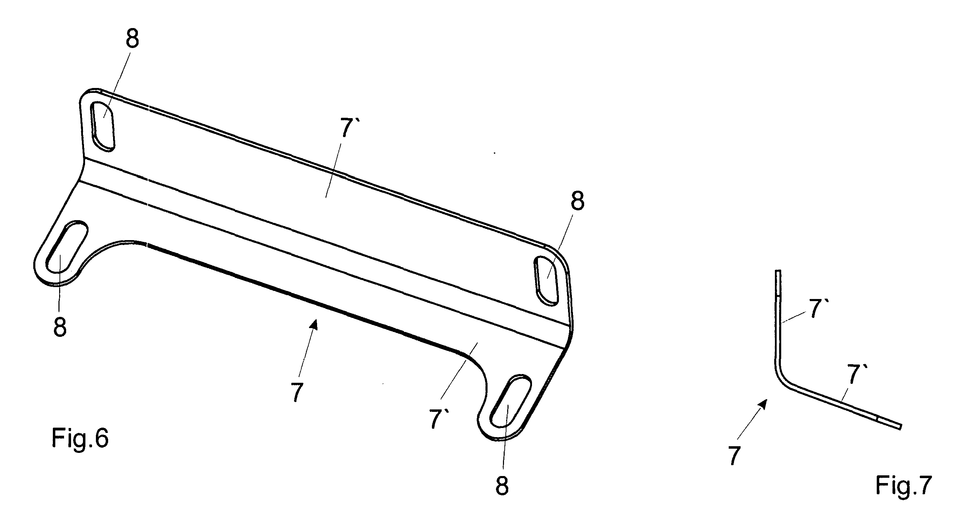

- Fig. 6: die Stabilisierungsstrebe in perspektivischer Darstellung und
- Fig. 7: die Stabilisierungsstrebe in Seitenansicht.

Das Striegelelement 1 weist über einen Querverbindung 2 miteinander nach unten ragenden Striegelzinken 3 auf. Über den Querverbindung 2 sind die Striegelelemente 1 mittels eines Befestigungselementes 4 an einem Querbalken 5 angeordnet. Die einem Querbalken 5 beabstandet zueinander angeordneten Striegelelemente 1 bilden eine Striegelvorrichtung für Bodenbearbeitungs- und/oder Sägegeräte. Somit sind also eine Mehrzahl von Striegelelementen 1 zu einer Striegelvorrichtung zusammengefasst angeordnet. Der Querbalken 5 ist an dem Bodenbearbeitungs- und/oder Sägegerät mittels geeigneter Befestigungsmittel befestigt.

Die Striegelelemente 1 weisen jeweils zwischen der Querverbindung 2 und den nach unten in Richtung des Bodens ragenden Striegelzinken 3 zumindest zwei Federwindungen 6 auf. Um die Anordnung und Befestigung der Striegelzinken 3 zu stabilisieren ist im oberen Bereich in der Nähe der Federwindungen 6 die Stabilisierungsstrebe 7 angeordnet, welche zumindest annähernd parallel zu der Querverbindung 2 verlaufend angeordnet ist.

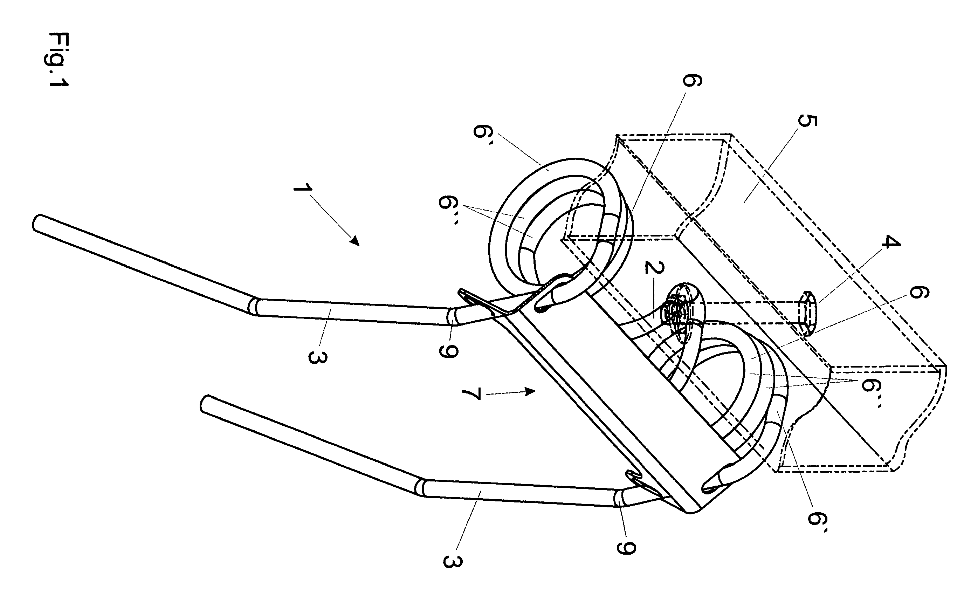

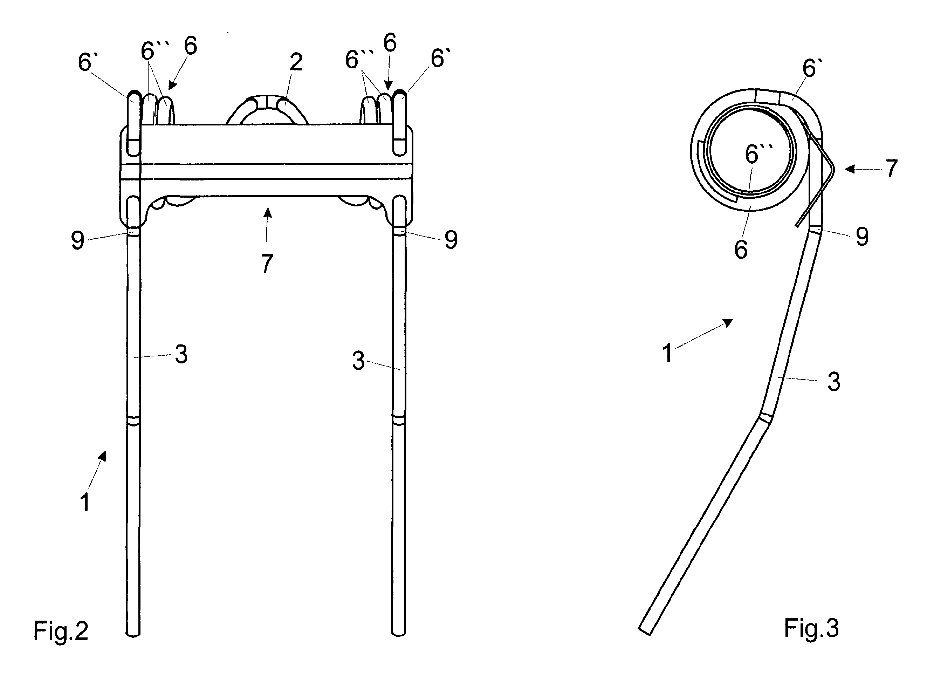

Die Stabilisierungsstrebe 7 besteht aus zwei zueinander abgewinkelten und miteinander verbundenen Flächenelementen 7'. In den Bereich der äußeren Ecken der Flächenelemente 7' sind die Durchbrüche 8 angeordnet. Durch diese Durchbrüche 8 werden die Striegelzinken 3 gesteckt, wie die Fig. 1 bis 3 zeigen.

Die jeweilige in den Striegelzinken 3 übergehende Federwindung 6' weist zumindest in dem Übergangsbereich zwischen den Federwindungen 6 und dem Striegelzinken 3 einen größeren Durchmesser als die übrigen Federwindungen 6" auf, wie die Zeichnungen zeigen. Die Stabilisierungsstrebe 7 wird auf die Striegelzinken 3 aufgesteckt, so dass die Striegelzinken 3 im montierten Zustand der Stabilisierungsstrebe 7 durch die zwei beabstandet übereinander liegenden Durchbrüche 8 gesteckt sind. Im montierten Zustand ist die Stabilisierungsstrebe 7 bis in den besagten größeren Durchmesser aufweisenden Bereich der Federwindung 6' geschoben, so dass sie dort angeordnet ist. Die miteinander verbundenen Flächenelemente 7' der Stabilisierungsstrebe 7 sind in Verbindung mit den Durchbrüchen 8 derart ausgebildet und angeordnet, dass die jeweilige Stabilisierungsstrebe 7 mittels Reibschluss auf den Striegelzinken 3 angeordnet ist. Weiterhin ist zur sicheren Anordnung der Stabilisierungsstrebe 7 auf den Striegelzinken 3 der jeweilige Striegelzinken 3 unmittelbar unterhalb des Bereiches, in dem die Stabilisierungsstrebe 7 angeordnet ist, gegen über diesem besagten Bereich mittels einer Abwinklung 9 abgewinkelt.

## Patentansprüche

1. Striegelvorrichtung für Bodenbearbeitungs- und/oder Sägegeräte mit einer Mehrzahl von Striegelelementen, die jeweils paarweise mittels eines Befestigungselementes über eine die beiden Striegelelemente verbindende Querverbindung an einem an dem Gerät angeordneten Querbalken befestigt sind, wobei jeweils zwischen der Querverbindung und den nach unten in Richtung des Bodens ragenden Striegelzinken hierbei zumindest zwei Federwindungen sich befinden, wobei die beiden Striegelzinken in ihrem oberen Bereich in der Nähe der Federwindungen mittels einer Stabilisierungsstrebe, die zumindest annähernd parallel zu dem Querbalken verlaufend angeordnet ist, in stabilisierender Weise miteinander verbunden sind, wobei die in den Striegelzinken (3) übergehende Federwindung (6') zumindest in dem Übergangsbereich zwischen Federwindung (6) und Striegelzinken (3) einen größeren Durchmesser als die übrigen Federwindungen (6") aufweist, **dadurch gekennzeichnet, dass** die Stabilisierungsstrebe (7) zumindest teilweise in dem den besagten größeren Durchmesser aufweisenden Bereich (6') der Federwindung (6) angeordnet ist.

2. Striegelvorrichtung nach Anspruch 1, **dadurch gekennzeichnet, dass** die Stabilisierungsstrebe (7) für jeden Striegelzinken (3) zwei beabstandet übereinander liegende Durchbrüche (8), durch welche jeweils ein Striegelzinken (3) im montierten Zustand der Stabilisierungsstrebe (7) gesteckt ist, aufweist.

3. Striegelvorrichtung nach zumindest einem der vorstehenden Ansprüche, **dadurch gekennzeichnet, dass** der jeweilige Striegelzinken (3) unmittelbar unterhalb des Bereiches, in dem die Stabilisierungsstrebe (7) angeordnet ist, gegenüber diesem besagten Bereich mittels einer Abwinklung (9) abgewinkelt ist.

4. Striegelvorrichtung nach zumindest einem der vorstehenden Ansprüche, **dadurch gekennzeichnet, dass** die Stabilisierungsstrebe (7) aus zwei zueinander abgewinkelten und miteinander verbundenen Flächenelementen (7') besteht, dass jeweils in dem Bereich der äußeren Ecken der Flächenelemente (7') die Durchbrüche (8), durch welche die Striegelzinken (3) gesteckt sind, angeordnet sind.

5. Striegelvorrichtung nach zumindest einem der vorstehenden Ansprüche, **dadurch gekennzeichnet, dass** die Durchbrüche (8) und/oder die zueinander abgewinkelten Flächen (7') im Bezug auf die durch die Durchbrüche (8) gesteckten Zinken (3) derart ausgebildet und/oder angeordnet sind, dass die jeweilige Stabilisierungsstrebe (7) mittels Reibschluß auf den Striegelzinken (3) angeordnet ist.

## Claims

1. Weeder harrow apparatus for soil cultivation devices and/or seeders, having a plurality of weeder harrow elements which are each fastened in pairs to a crossbar, arranged on the device, by means of a fastening element via a transverse connection connecting the two weeder harrow elements, wherein in this case at least two spring coils are located in each case between the transverse connection and the weeder harrow tines that project downwards in the direction of the ground, wherein the two weeder harrow tines are connected together in a stabilizing manner in their upper region in the vicinity of the spring coils by means of a stabilizing strut which is arranged in a manner extending at least approximately parallel to the crossbar, wherein the spring coil (6') that merges into the weeder harrow tine (3) has a larger diameter, at least in the transition region between the spring coil (6) and the weeder harrow tine (3), than the remaining spring coils (6"), **characterized in that** the stabilizing strut (7) is arranged at least partially **in that** region (6') of the spring coil (6) that has said larger diameter.

2. Weeder harrow apparatus according to Claim 1, **characterized in that**, for each weeder harrow tine (3), the stabilizing strut (7) has two spaced-apart apertures (8) which are located one above the other and through which in each case one weeder harrow tine (3) is plugged in the mounted state of the stabilizing strut (7).

3. Weeder harrow apparatus according to at least one of the preceding claims, **characterized in that**, immediately beneath the region in which the stabilizing strut (7) is arranged, each weeder harrow tine (3) is angled with respect to said region by means of an angled section (9).

4. Weeder harrow apparatus according to at least one of the preceding claims, **characterized in that** the stabilizing strut (7) consists of two surface elements (7') which are angled with respect to one another and are connected together, and **in that** the apertures (8) through which the weeder harrow tines (3) are plugged, are arranged in each case in the region of the outer corners of the surface elements (7').

5. Weeder harrow apparatus according to at least one of the preceding claims, **characterized in that** the apertures (8) and/or the surfaces (7') which are angled with respect to one another are designed and/or arranged in such a way with regard to the tines (3) plugged through the apertures (8) that each stabilizing strut (7) is arranged on the weeder harrow tines (3) by means of a frictional connection.

## Revendications

1. Dispositif de recouvrement pour appareils de travail du sol et/ou de semis, comprenant une pluralité d'éléments de recouvrement qui sont fixés à chaque fois par paire au moyen d'un élément de fixation par le biais d'une liaison transversale reliant les deux éléments de recouvrement à une poutre transversale disposée sur l'appareil, au moins deux enroulements de ressort étant dans ce cas disposés à chaque fois entre la liaison transversale et les dents de recouvrement faisant saillie vers le bas dans la direction du sol, les deux dents de recouvrement étant connectées l'une à l'autre de manière stabilisante dans leur région supérieure à proximité des enroulements de ressort au moyen d'une entretoise de stabilisation, qui est disposée de manière à s'étendre au moins approximativement parallèlement à la poutre transversale, l'enroulement de ressort (6') se prolongeant par les dents de recouvrement (3) présentant, au moins dans la région de transition entre l'enroulement de ressort (6) et les dents de recouvrement (3), un plus grand diamètre que les autres enroulements de ressort (6"), **caractérisé en ce que** l'entretoise de stabilisation (7) est disposée au moins en partie dans la région (6') de l'enroulement de ressort (6) présentant ledit plus grand diamètre.

2. Dispositif de recouvrement selon la revendication 1, **caractérisé en ce que** l'entretoise de stabilisation (7) présente, pour chaque dent de recouvrement (3), deux orifices (8) espacés l'un au-dessus de l'autre, à travers lesquels est introduite à chaque fois une dent de recouvrement (3) dans l'état monté de l'entretoise de stabilisation (7).

3. Dispositif de recouvrement selon au moins l'une quelconque des revendications précédentes, **caractérisé en ce que** la dent de recouvrement respective (3) est coudée directement en dessous de la région dans laquelle est disposée l'entretoise de stabilisation (7), par rapport à ladite région, au moyen d'un coudage (9).

4. Dispositif de recouvrement selon au moins l'une quelconque des revendications précédentes, **caractérisé en ce que** l'entretoise de stabilisation (7) se compose de deux éléments de surface (7') coudés l'un par rapport à l'autre et connectés l'un à l'autre, **en ce qu'**à chaque fois dans la région des coins extérieurs des éléments de surface (7') sont disposés les orifices (8) à travers lesquels sont introduites les dents de recouvrement (3).

5. Dispositif de recouvrement selon au moins l'une quelconque des revendications précédentes, **caractérisé en ce que** les orifices (8) et/ou les surfaces (7') coudées l'une par rapport à l'autre sont réalisés et/ou disposés par rapport aux dents (3) introduites à travers les orifices (8) de telle sorte que l'entretoise de stabilisation respective (7) soit disposée au moyen d'un engagement par friction sur les dents de recouvrement (3).
